# FASCICULE DE BREVET EUROPEEN

(11) **EP 2 009 158 B1**
(45) Date de publication et mention de la délivrance du brevet: **29.02.2012**
(21) Numéro de dépôt: 08356077.1
(22) Date de dépôt: 04.06.2008
(51) Int. Cl.: D03C 9/06, F16B 39/24

(54) **Dispositif de freinage, cadre de lisses équipé d'un tel dispositif de freinage et métier à tisser équipé d'un tel cadre**
Bremsvorrichtung, Weblitzenrahmen, der mit einer solchen Bremsvorrichtung ausgestattet ist, und Webrahmen, der mit einem solchen Litzenrahmen ausgestattet ist
Braking device, heald frame equipped with such a braking device and loom equipped with such a frame

(30) Priorité: 08.06.2007 FR 0704107
(43) Date de publication de la demande: 31.12.2008
(73) Titulaire: STAUBLI FAVERGES, 74210 FAVERGES (FR)
(72) Inventeur: Fumex, André, 74210 Cons Sainte Colombe (FR); Bejuy, Daniel, 74940 Annecy le Vieux (FR)
(74) Mandataire: Myon, Gérard Jean-Pierre

(56) Documents cités:
- EP-A- 0 189 216
- EP-A- 1 380 757
- FR-A- 2 857 987
- US-A- 2 090 110
- US-A- 5 975 147
- US-A1- 2005 089 385

## Description

La présente invention concerne un dispositif de freinage pour l'assemblage d'un montant et d'une traverse appartenant tout deux à un cadre de lisses de métier à tisser. L'invention concerne également un cadre de lisses équipé d'un tel dispositif de freinage, ainsi qu'un métier à tisser comprenant un tel cadre de lisses.

Un métier à tisser comprend généralement plusieurs cadres de lisses juxtaposés et manoeuvrés individuellement selon un mouvement d'oscillations verticales au moyen d'un dispositif d'entraînement, comprenant une ratière ou une mécanique à cames. Chaque cadre de lisses est réalisé par un assemblage réversible de deux montants et de deux traverses, l'ensemble présentant une forme globalement rectangulaire. En configuration d'utilisation du cadre de lisses, les montants sont sensiblement verticaux, tandis que les traverses sont sensiblement horizontales.

FR-A-2 857 987 décrit l'assemblage mutuel des deux montants et des deux traverses d'un cadre de lisses. En l'occurrence, le montant présente un tenon qui est reçu dans un élément tubulaire intermédiaire logé dans un évidement ménagé dans la traverse. Le blocage du montant par rapport à la traverse est réalisé par l'appui du tenon contre l'une des surfaces de l'élément tubulaire, par l'intermédiaire d'une vis de pression serrée dans un écrou logé dans l'élément tubulaire.

Cependant, les cadres de lisses d'un métier à tisser sont soumis en fonctionnement à des vibrations susceptibles de provoquer le desserrage des vis assemblant les montants sur les traverses et l'endommagement de ces pièces. Ce risque de desserrage est particulièrement important pour les vis de pression. En outre, le risque de desserrage est d'autant plus important que certaines vis doivent être courtes compte tenu des encombrements réduits disponibles pour réaliser l'assemblage des montants sur les traverses.

EP-A-1 380 757 décrit un dispositif de freinage pour assembler une tôle et un profilé de grandes superficies au moyen de plusieurs vis de fixation dont les têtes comportent des dents coopérant avec des dents de la tôle. Cependant, le dispositif de freinage de EP-A-1 380 757 est inadapté à l'assemblage d'un montant et d'une traverse d'un cadre de lisses, car il est trop encombrant et car la tôle pourrait tourner autour de l'axe d'une vis.

La présente invention vise notamment à remédier à ces inconvénients en proposant un dispositif de freinage simple et limitant efficacement le desserrage d'une vis de pression malgré les vibrations dues au fonctionnement du métier à tisser.

A cet effet, l'invention concerne un dispositif de freinage pour l'assemblage d'un montant et d'une traverse appartenant tous deux à un cadre de lisses de métier à tisser, ce dispositif comprenant une vis de pression destinée à assembler un élément du montant par rapport à un élément de la traverse, la vis présentant une tête en saillie par rapport à sa tige. La face inférieure de la tête de la vis comporte au moins une dent et le dispositif de freinage comprend, en outre, une lamelle disposée sous la tête de la vis, la lamelle comportant au moins une dent apte à être rappelée élastiquement vers la tête de la vis dans une position où au moins une dent de la vis et au moins une dent de la lamelle sont mises en contact au moins en cas de rotation de la vis dans le sens du desserrage. La lamelle et la vis présentent un encombrement latéral inférieur à l'épaisseur de la traverse et la lamelle comporte au moins une surface latérale ou une surface longitudinale formant obstacle à la rotation de la lamelle autour d'un axe de la vis.

Selon d'autres caractéristiques avantageuses mais facultatives du dispositif de freinage objet de l'invention, prises isolément ou selon toute combinaison techniquement possible :
- la ou chaque dent de la vis et la ou chaque dent de la lamelle présentent respectivement des surfaces de serrage, destinées à entrer mutuellement en contact glissant lors du serrage de la vis, et des surfaces de desserrage, destinées à entrer mutuellement en contact bloquant lors du desserrage de la vis,
- la ou chaque surface de serrage de la ou de chaque dent de la vis forme, avec un plan orthogonal à un axe de la vis, un angle inférieur à l'angle formé avec ledit plan par la ou chaque surface de desserrage de cette dent,
- l'angle formé par la ou chaque surface de serrage de la ou de chaque dent de la vis est compris entre 20° et 50° et l'angle formé par la ou chaque surface de desserrage de la ou de chaque dent de la vis est compris entre 90° et 120°,
- la face inférieure de la tête de la vis comporte plusieurs dents réparties uniformément autour d'un axe de la vis,
- la lamelle est maintenue en position longitudinale sur la traverse,
- la ou chaque dent de la lamelle est disposée dans une région convexe de la lamelle,
- la déformation de la lamelle sous une action unidirectionnelle de l'opérateur libère la ou les dents de la lamelle de toute prise avec la ou les dents de la vis alors que le dispositif reste sensiblement dans le même encombrement latéral,
- la région présente une hauteur supérieure à l'état desserré ou libre qu'à l'état serré de la vis,
- la lamelle comporte un trou pour le passage de la vis et la ou chaque dent de la lamelle est formée par un pan issu du cisaillement du contour du trou et plié en saillie au-dessus d'un plateau de la lamelle dans lequel est ménagé le trou, la tranche cisaillée du pan formant la surface de desserrage, tandis qu'une partie de la face supérieure du plateau qui forme ce pan plié forme la surface de serrage,
- la surface de desserrage est inclinée par rapport à la face de la lamelle dans laquelle est ménagé le trou d'un angle compris entre 90° et 130°.

Par ailleurs, l'invention concerne un cadre de lisses pour métier à tisser comprenant deux montants et deux traverses aptes à porter des lisses. Selon l'invention, le cadre est équipé d'au moins un dispositif de freinage tel qu'exposé ci-dessus.

Selon une caractéristique avantageuse mais facultative du cadre de lisses objet de l'invention :
- le cadre comporte, en outre, un cavalier intercalé entre le bout de la vis et le montant, la lamelle étant formée dans un prolongement du cavalier.

D'autre part, l'invention concerne un métier à tisser, caractérisé en ce qu'il comprend au moins un cadre de lisses tel qu'exposé ci-dessus.

L'invention sera mieux comprise et d'autres avantages de celle-ci apparaîtront plus clairement à la lecture de la description qui va suivre faite en référence aux dessins annexés, dans lesquels :
- la figure 1 est une vue de face d'un cadre de lisses conforme à l'invention et pourvu de dispositifs de freinage conformes à l'invention ;
- la figure 2 est une vue à plus grande échelle du détail II à la figure 1 montrant un dispositif de freinage du cadre de la figure 1, ce dispositif comprenant une lamelle et une vis de pression ;
- la figure 3 est une vue à plus grande échelle en perspective de la vis de pression du dispositif de freinage de la figure 2 ;
- la figure 4 est une vue à plus grande échelle en perspective de la lamelle du dispositif de freinage de la figure 2 ;
- les figures 4A et 4B sont des vues en développé d'une dent de la vis et d'une dent de lamelle du dispositif de freinage de la figure 2 ;
- la figure 5 est une vue partielle en perspective et à plus grande échelle du dispositif de freinage de la figure 2 monté sur une traverse du cadre ; et
- la figure 6 est une vue en perspective d'une variante du dispositif de freinage de la figure 5, des éléments du cadre étant omis pour la clarté du dessin.

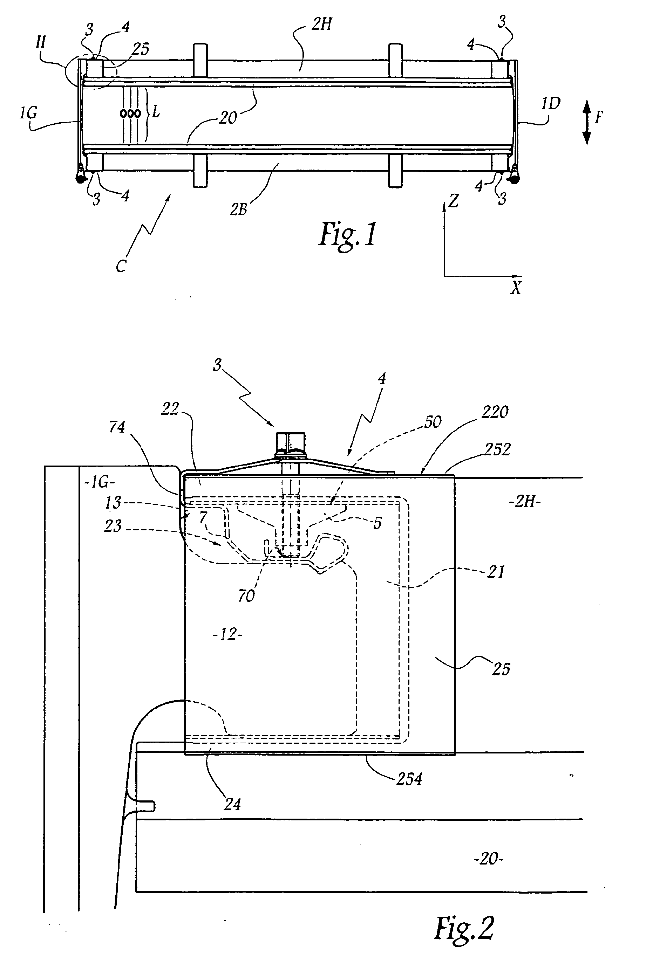

La figure 1 illustre un cadre C de lisses L pour métier à tisser comprenant deux montants, gauche 1 G et droit 1 D, et deux traverses, haute 2H et basse 2B. Les termes haut, bas, gauche et droit se rapportent à la configuration d'utilisation du cadre C sur un métier à tisser, telle que représentée à la figure 1. Les montants 1 G et 1 D s'étendent parallèlement à un axe Z sensiblement vertical lorsque le cadre C est en place sur un métier à tisser. Les traverses 2H et 2B s'étendent perpendiculairement aux montants 1 G et 1 D et parallèlement à un axe X longitudinal et sensiblement horizontal lorsque le cadre C est en place sur un métier à tisser.

Les lisses L de guidage des fils de chaîne sont fixées sur des tringles porte-lisses 20, elles-mêmes solidarisées sur les traverses 2H et 2B. En fonctionnement, le cadre C oscille sensiblement selon l'axe Z comme représenté par la double flèche F. Les oscillations du cadre C et des cadres voisins génèrent des vibrations dans leurs structures.

Le cadre C comprend des moyens d'assemblage de chaque montant 1 G ou 1 D à chaque traverse 2H ou 2B, dont notamment des dispositifs de freinage comprenant chacun une vis 3 et une lamelle 4. L'assemblage du montant gauche 1 G et de la traverse haute 2H est détaillé ci-après. Cependant, l'assemblage de la traverse haute 2H avec le montant droit 1 D ou celui de la traverse basse 2B avec l'un ou l'autre des montants 1 G ou 1 D incorpore les mêmes caractéristiques structurelles et fonctionnelles que l'assemblage décrit ci-après.

La traverse 2H est creusée d'un évidement 23 qui débouche au niveau de la face terminale gauche de la traverse 2H. L'évidement 23 débouche aussi sur les faces latérales de la traverse 2H, qui s'étendent parallèlement au plan de la figure 2. Selon l'axe Z, l'évidement 23 est encadré par des branches haute 22 et basse 24 de la traverse 2H. L'évidement 23 présente une forme globalement parallélépipédique à section rectangulaire. Les branches haute 22 et basse 24 s'étendent donc selon l'axe X. Dans l'évidement 23 est collé un manchon 21 formé par un élément tubulaire à section rectangulaire.

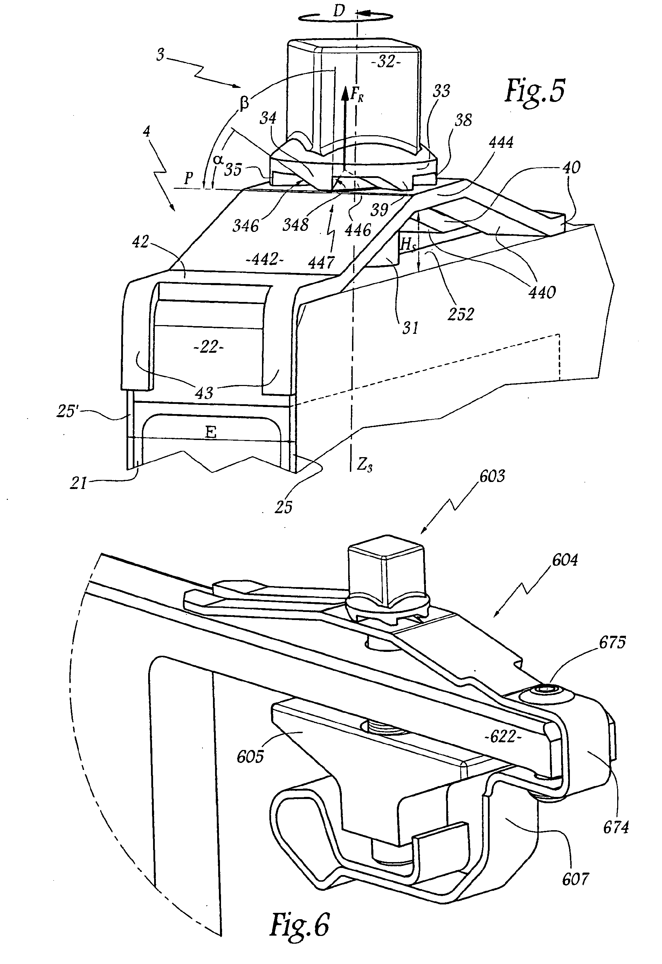

Deux plaques 25 et 25' recouvrent les faces latérales de l'extrémité de la traverse 2H, l'une étant visible à la figure 2 avec la référence 25, l'autre étant disposée sur la face opposée de la traverse 2H et étant partiellement visible sur la figure 5. Chaque plaque latérale de type 25 s'étend notamment en regard de l'évidement 23 et des branches haute 22 et basse 24 et recouvre une face latérale du manchon 21. L'épaisseur E de la traverse est définie par l'encombrement latéral de la traverse lorsqu'elle est équipée des moyens d'assemblage du montant, comprenant, entre autres, les plaques latérales 25 et 25'.

La plaque 25 comprend deux rabats, inférieur 254 et supérieur 252, qui viennent se positionner respectivement localement sur les tranches inférieure et supérieure de la traverse 2H. Les rabats supérieurs, du type du rabat 252, des deux plaques latérales 25 et 25' forment un habillage 220 de la tranche supérieure de la traverse 2H.

Le manchon 21 reçoit un tenon 12 formé par une protubérance du montant 1 G disposée en saillie sur sa face droite 13. Chacune des dimensions du tenon 12 est inférieure à la dimension intérieure correspondante du manchon 21, si bien que le tenon 12 peut être introduit avec jeu dans le manchon 21.

Le manchon 21 forme ainsi un élément tubulaire intermédiaire de fixation entre la traverse 2H et le montant 1 G. Le manchon 21 peut être réalisé à partir d'un tube coupé aux dimensions appropriées dont la section transversale est globalement rectangulaire. Le manchon 21 peut être constitué d'un métal à haute résistance mécanique, tel que l'acier inoxydable.

Pour l'assemblage de la traverse 2H avec le tenon 12, donc avec le montant 1 G, le dispositif de freinage comprend la vis 3 utilisée en vis de pression et coopérant avec la lamelle 4. Les structures respectives de la vis 3 et de la lamelle 4 sont détaillées plus loin. Un cavalier 7 constitué d'une lame ressort est disposé dans la partie haute du manchon 21. Il est rendu solidaire, par exemple par collage, de la branche haute 22 de la traverse 2H par un crochet 74 en forme de « U » dont la géométrie correspond à celle de l'extrémité de la branche haute 22. La partie supérieure du cavalier 7 est apposée sur la tranche supérieure de la traverse 2H.

Une partie médiane du cavalier 7 est posée sur la face supérieure du tenon 12, lorsque celui-ci est mis en place dans le manchon 21, et elle présente une surface 70 qui transmet au tenon 12 la pression d'assemblage exercée par la vis 3. Le cavalier 7 est ainsi intercalé entre le tenon 12 et la vis 3.

La vis 3 coopère avec un écrou 5 à section rectangulaire, en appui sur la face interne supérieure du manchon 21 solidaire de la traverse 2H. La lamelle 4, la branche haute 22 et le manchon 21 présentent des orifices respectifs co-axiaux à la vis 3 et au taraudage de l'écrou 5 et la lamelle 4 se trouve disposée sous la tête de la vis 3.

Lors de l'assemblage du montant 1 G sur la traverse 2H, on serre la vis 3 dans l'écrou 5, ce qui contribue à presser le tenon 12 contre la surface interne inférieure du manchon 21 tandis que l'écrou 5 exerce une pression contre la surface interne supérieure du manchon 21 par l'intermédiaire d'une surface de contact 50. Le montant 1 G est ainsi fixé par rapport à la traverse 2H.

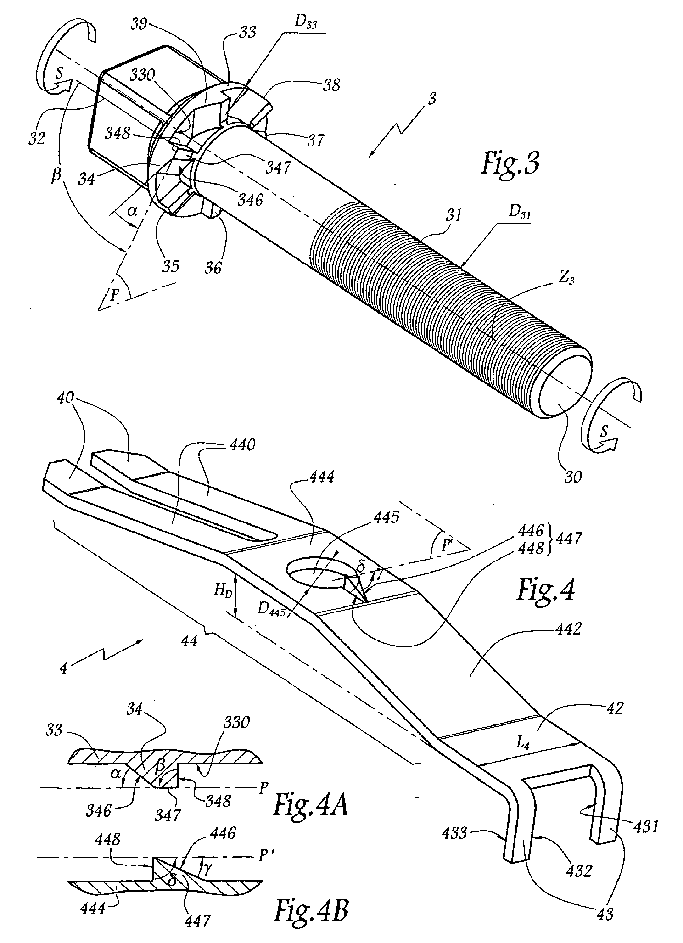

Comme le montre la figure 3, la vis 3 comporte une tige 31 filetée s'étendant selon un axe Z₃ et surmonté d'une tête 32. L'axe Z₃ forme l'axe longitudinal de la vis 3. La tige 31 présente un bout 30 de forme plate pour répartir la pression à exercer sur la surface 70 du cavalier 7. Du côté de la tige 31, la tête 32 comporte une couronne 33 de diamètre D₃₃ supérieur à celui D₃₁ de cette tige 31, si bien que la tête 32 est en saillie radiale par rapport à la tige 31. La couronne 33 présente donc un diamètre D₃₃ supérieur au diamètre D₃₁ de la tige 31.

La face inférieure de la couronne 33, donc de la tête 32, qui est celle orientée vers la tige 31, comporte six dents 34 à 39 semblables entre elles et réparties uniformément autour de l'axe Z₃. Deux dents consécutives sont donc espacées d'un pas angulaire valant 60°. Le pas angulaire séparant deux dents consécutives de la vis est choisi en fonction de la rotation de desserrage tolérée pour la vis, c'est-à-dire en fonction de la perte de couple de serrage admissible pour maintenir la stabilité de l'assemblage du montant sur la traverse.

Dans la mesure où les dents 34 à 39 sont semblables entre elles, la description suivante de la dent 34 peut être transposée directement à la structure des dents 35 à 39.

La dent 34 présente une forme dissymétrique composée d'une surface de serrage 346 et d'une surface de desserrage 348 reliées entre elles par un plateau 347. Les surfaces 346 et 348 s'étendent notamment selon des directions radiales, c'est-à-dire perpendiculaires à l'axe Z₃, qui définissent entre elles un secteur angulaire donné. Les surfaces 346 et 348 sont dites respectivement de serrage et de desserrage, car elles sont destinées à entrer en contact avec des parties correspondantes de la lamelle 4 lors des rotations de la vis 3 respectivement dans le sens du serrage S et dans le sens du desserrage D. La rotation dans le sens de serrage est représentée par une flèche S à la figure 3 et la rotation dans le sens de desserrage par une flèche D à la figure 5.

La surface de serrage 346 forme un angle α valant 30° avec un plan P orthogonal à l'axe Z₃ et passant par le sommet de la dent 34. En pratique, l'angle α peut être compris entre 20° et 50°. La surface de desserrage 348 forme un angle β valant 90° avec le plan P. En pratique, l'angle β peut être compris entre 90° et 120°. Les angles α et β sont définis dans le sens trigonométrique entre respectivement la surface de serrage 346 ou la surface de desserrage 348 et le plan P.

Sur la figure 3, les angles α et β sont repérés par rapport au plateau 347, lequel est, en l'occurrence, coplanaire au plan P. Néanmoins, le plateau 347 qui relie les surfaces de serrage 346 et de desserrage 348 pourrait ne pas être orthogonal à l'axe Z₃, voire ne pas être plan. Dans un tel cas, les angles α et β demeurent définis par rapport à un plan orthogonal à l'axe Z₃ de la vis 3.

Comme le montrent les figures 2, 4 et 5, la lamelle 4 comporte une plaque 42 et deux semelles 40 venant en appui contre la tranche supérieure de la traverse 2H. Entre la plaque 42 et la semelle 40, la lamelle 4 présente une région bombée ou convexe 44 culminant au niveau d'un plateau 444 plan sensiblement parallèle au plan P lorsque la lamelle 4 est placée sous la tête de la vis 3. Le plateau 444 est relié aux semelles 40 par l'intermédiaire de deux jambes respectives 440 et à la plaque 42 par l'intermédiaire d'une plaque oblique 442. L'indépendance des jambes 440 permet d'assurer le contact de chaque semelle 40 avec la tranche supérieure de la traverse 2H de manière équilibrée, quelle que soit la planéité de son habillage 220.

Le plateau 444 présente un trou traversant 445 de forme circulaire destiné au passage de la vis 3. Le trou 445 présente donc un diamètre D₄₄₅ supérieur au diamètre D₃₁ de la tige 31. Selon des variantes non représentées, le trou 445 peut être oblong ou réalisé par une encoche, qui forme un trou débouchant sur un côté de la lamelle.

La lamelle 4 comporte en outre une dent 447 apte à coopérer avec chacune des dents 34 à 39 de la tête 32 de la vis 3. La dent 447 est disposée à proximité du trou 445. Elle est ici formée par un pan du plateau 444 issu d'un cisaillement réalisé à partir du contour du trou 445, puis plié en saillie au-dessus de la face supérieure du plateau 444. Le cisaillement est réalisé parallèlement à la direction X, dans une partie massive de la lamelle 4, pour minimiser la fragilisation de cette dernière.

La dent 447 présente une surface de serrage 446 formée par la partie de la face supérieure du plateau 444 qui forme ce pan plié, ainsi qu'une surface de desserrage 448 formée par la tranche cisaillée de ce pan. Les surfaces 446 et 448 sont dites respectivement de serrage et de desserrage, car elles sont destinées à entrer en contact respectivement avec une surface de serrage, par exemple 346, et une surface de desserrage, par exemple 348, d'une dent de la vis 3.

La surface de serrage 446 est inclinée d'un angle γ valant environ 40° par rapport à la face supérieure plane du plateau 444. En pratique, l'angle γ peut être compris entre 20° et 60°. La surface de desserrage 448 est inclinée d'un angle δ valant environ 90° par rapport à la face supérieure plane du plateau 444. En pratique l'angle δ peut être compris entre 90° et 130°. Ces angles γ et δ sont définis dans le sens trigonométrique respectivement entre la surface de serrage 446 ou la surface de desserrage 448 et le plan P' parallèle à la surface du plateau 444 tournée vers la dent 447 et passant par le sommet de la dent 447. Avantageusement l'angle α est inférieur à l'angle β, et l'angle γ est inférieur à l'angle δ, ce qui implique un effort de blocage de la rotation de la vis moins important dans le sens du serrage que dans le sens du desserrage.

La région convexe 44 permet à la lamelle 4 de fléchir vers la branche 22, dans la mesure où la lamelle 4 est composée d'un matériau élastiquement déformable, tel qu'un acier inoxydable.

Le comportement élastique de la lamelle 4 permet au plateau 444 de s'abaisser vers la branche haute 22 lorsqu'il subit un effort en direction de la tranche supérieure 220 de la traverse 2H. Lorsque cet effort est diminué, la lamelle 4 tend à revenir dans une position où la dent 447 de la lamelle 4 est ramenée en direction de la tête 32 pour être de nouveau en prise avec une dent 34 à 39 de la vis 3 lorsque la rotation de la vis se poursuit.

La lamelle 4 présente deux pattes 43 aptes à la centrer dans l'épaisseur E de la traverse 2H lorsqu'elles sont introduites dans des orifices correspondants ménagés sur l'habillage 220 de la tranche supérieure ou lorsqu'elles viennent de part et d'autre du cavalier 7. Les surfaces latérales 431 et 432 des pattes 43 de la lamelle 4 forment obstacle à la rotation de la lamelle 4 autour de l'axe Z₃ de la vis 3 lors de la rotation de serrage et de desserrage de la vis 3. En variante, une surface longitudinale 433 d'une patte 43, si elle était collée à la traverse 2H, pourrait former seule obstacle à cette rotation. Les pattes 43 ici recourbées sont montées à force autour du cavalier 7, lui-même maintenu sur la traverse 2H, si bien qu'elles maintiennent également la lamelle 4 en position longitudinale sur la traverse 2H.

Par conséquent, en cas de rotation de la vis 3 dans le sens du desserrage D, sous l'effet des vibrations, il y a nécessairement contact entre les surfaces de desserrage, à savoir la surface 448 et l'une des surfaces de desserrage des dents 34 à 39, par exemple 348. Or, un tel contact est bloquant, c'est-à-dire non glissant, si bien qu'il empêche toute rotation supplémentaire de la vis 3, du fait de l'inclinaison élevée de ces surfaces de desserrage, c'est-à-dire de la valeur proche de 90° des angles β et δ et du blocage en rotation de la lamelle 4.

A l'inverse, l'inclinaison modérée des surfaces de serrage, par exemple 346 et 446, n'empêche pas la rotation de la vis 3 dans le sens du serrage S, car les surfaces de serrage peuvent glisser l'une par rapport à l'autre. Ce glissement est du reste facilité par l'élasticité de la lamelle 4, laquelle peut s'abaisser légèrement pour faciliter le passage de chaque dent 34 à 39 en regard de la dent 447.

En d'autres termes, la dent 447 joue le rôle d'un cliquet pour les dents 34 à 39 de la vis 3. Les angles α et γ, d'une part, et β et δ, d'autre part, peuvent être sensiblement égaux, ce qui permet des contacts de superficie étendue entre surfaces de serrage et surfaces de desserrage limitant ainsi leur usure.

On peut, par une construction adaptée des dents de la vis, de la dent de la lamelle, de la hauteur libre ou « desserrée » H_{D} du plateau 444 par rapport à la plaque 42 visible à la figure 4, faire en sorte que, en position serrée de la vis 3, c'est-à-dire lorsque le couple de serrage est atteint et que le montant est ainsi assemblé avec la traverse, le plateau 444 se trouve à une hauteur de serrage Hₛ, visible à la figure 5, inférieure à la hauteur H_{D}. Ainsi, en position serrée de la vis 3, la lamelle 4 exerce, au niveau de sa dent 447 et éventuellement de son plateau 444, une force de rappel élastique F_{R} sous la tête 32 de la vis 3. L'intensité de la force de rappel élastique F_{R} peut être déterminée par le dimensionnement de la lamelle 4, en particulier par l'épaisseur, la longueur et la hauteur H_{D} de sa région 44, et par le module d'élasticité du matériau qui la compose.

Par ailleurs, la lamelle 4 et la vis 3 présentent chacune un encombrement latéral inférieur à l'épaisseur E de la traverse 2H. En particulier, la largeur L₄ de la lamelle 4 et le diamètre D₃₃ de la couronne 33 sont inférieurs à l'épaisseur E. De plus, la vis 3 et la lamelle 4 sont agencées de manière à ne pas dépasser latéralement de la traverse 2H, afin de ne pas gêner les oscillations des cadres de lisses adjacents.

Lors du serrage de la vis 3, son bout 30 se rapproche de la face supérieure du tenon 12 et sa tête 32 se rapproche de la tranche supérieure de la traverse 2H et de la lamelle 4. Des dents 34 à 39 entrent l'une après l'autre en contact avec la dent 447 de la lamelle 4. A chaque contact mutuel des surfaces de serrage, l'effort de serrage appliqué par la surface de serrage 346 de la dent de la vis 3 sur la surface de serrage 446 escamote la dent 447 par flexion et rabattement du pan plié de la dent 447 et/ou par flexion de la région 44 de la lamelle 4 vers la tranche supérieure de la traverse 2H.

Ainsi, la rotation de la vis 3 dans le sens S du serrage et le couple de serrage appliqué à la vis 3 ne sont pas perturbés outre mesure, si bien que l'opérateur peut se contenter de tourner la vis 3 jusqu'au couple de serrage préconisé sans se préoccuper de la lamelle 4. Après le serrage, en position statique, la dent 447 se trouve indifféremment face à une zone 330 séparant deux dents 34 à 39 consécutives, ou au niveau d'une dent 34 à 39.

Lors du fonctionnement du métier à tisser, le contact maintenu élastiquement entre la dent 447 et la couronne 33 de la tête 32 engendre des frottements qui augmentent le couple de desserrage à appliquer pour tourner la vis 3. De plus, si ces frottements s'avèrent insuffisants face aux vibrations du cadre C, la rotation de la vis 3 dans le sens D du desserrage est plafonnée à 60°, c'est-à-dire au pas angulaire séparant deux dents 34 à 39 successives de la vis 3. Le freinage lors d'une rotation de la vis 3 dans le sens du desserrage D est en effet opéré, dans un premier temps, par l'augmentation des frottements sous sa tête 32, et ensuite si besoin par le premier couple de surfaces de desserrage en contact.

Ainsi, lors de la rotation de desserrage de la vis 3, la dent 447, lorsqu'elle se trouve face à la zone 330 entre deux dents, est ramenée élastiquement vers la tête de vis pour être mise en contact avec une dent de la vis 3 si le desserrage se poursuit. Ce desserrage de la vis 3 est arrêté par ce contact mutuel entre une surface de desserrage 348 ou équivalente d'une dent de la vis 3, d'une part, et la surface de desserrage 448 de la dent 447, d'autre part. Or, les angles β et δ sont ici trop fortement inclinés pour permettre un glissement relatif entre ces surfaces de desserrage sous le couple de desserrage initié par les vibrations du cadre. La vis 3 et la lamelle 4 forment ainsi un dispositif de freinage limitant sous vibrations le desserrage de la vis 3 malgré sa longueur de travail réduite.

Pour desserrer la vis 3, de manière à retirer le tenon 12 hors du manchon 21, un opérateur doit appliquer simultanément un couple de desserrage sur la tête 32 et un effort sur la lamelle 4 selon l'axe Z₃ en direction de la tranche supérieure de la traverse 2H, de façon à fléchir la lamelle 4 et à libérer ainsi la dent 447 de toute prise avec les dents 34 à 39 pendant le desserrage.

La figure 6 illustre une variante au dispositif de freinage des figures 1 à 5, dans laquelle la référence numérique des éléments correspondants est augmentée de 600. Dans cette variante, une lamelle 604 est formée directement sur la tranche supérieure de la traverse dans le prolongement d'un cavalier 607. La pièce résultante est fixée à la branche haute 622 par un rivet 675, au niveau d'un crochet 674. Une vis 603 est serrée dans un écrou 605 pour fixer le montant à la traverse du cadre. Cette variante permet de simplifier la construction du cadre. Dans cette variante, la face du crochet 674 qui est en appui contre la surface terminale de la branche haute 622 peut former obstacle à la rotation de la lamelle 604 autour de la vis 603, à l'instar des surfaces latérales 431 et 432 ou longitudinale 433 des pattes 43 pour la lamelle 4.

Selon une variante non représentée de l'invention, la lamelle 604 peut être formée dans l'une des deux plaques latérales qui recouvrent le manchon logé dans l'évidement de la traverse. Une telle construction permet également de simplifier le cadre C. Dans une telle variante, c'est la surface latérale de la plaque-lamelle qui forme obstacle à la rotation de la lamelle autour de la vis en s'appuyant sur la surface latérale correspondante de la branche haute de la traverse.

En variante, on peut prévoir une lamelle présentant plusieurs dents autour du trou de passage de la vis, tandis que cette dernière peut ne présenter qu'une seule dent. Le débattement angulaire lors du desserrage est alors plafonné par le pas angulaire séparant deux dents consécutives de la lamelle. Alternativement, la vis et la lamelle peuvent comporter chacune plusieurs dents en prise.

Le couple de desserrage appliqué par un opérateur, au moyen d'un outil de desserrage, peut être bien supérieur au couple de desserrage initié par les vibrations et suffire à exercer sur la région bombée de la lamelle un effort dont une composante, dirigée vers la traverse, provoque une flexion suffisante de la lamelle et l'escamotage de chaque obstacle au desserrage.

On peut pour cela éventuellement adapter les géométries des dents et en particulier les surfaces de desserrage en adoptant une inclinaison relativement modérée, des angles β et/ou δ et, par exemple, de l'ordre de 120° pour l'angle β de la surface de desserrage de chaque dent de la vis.

Une telle flexion de la lamelle sous l'action de l'opérateur sur la tête de vis dispense l'opérateur d'exercer lui-même un effort sur la lamelle pour dégager les dents en prise de la vis. Cela simplifie le serrage et le desserrage, puisque l'opérateur doit simplement respecter le couple de serrage et appliquer un couple de desserrage suffisant, comme il le ferait lors de l'assemblage d'un cadre de l'art antérieur.

Si l'assemblage du montant sur une traverse nécessite plusieurs vis de pression, on peut prévoir de monter plusieurs vis coopérant avec une lamelle rallongée. Par ailleurs, la tête de la vis peut n'être en saillie par rapport à la tige de la vis que localement au niveau d'une portion de couronne.

Le dispositif de freinage illustré par les figures 1 à 5 ou 6 limite la rotation dans le sens du desserrage de la vis sous l'effet des vibrations engendrées lors du fonctionnement du métier à tisser. La disposition des dents sous la tête de la vis limite l'encombrement latéral de la vis, ce qui permet de respecter la division du cadre de lisses. De plus, pour un encombrement latéral donné, cette disposition des dents évite la fragilisation de la tête de vis ainsi que celle de la lamelle, qui est une pièce plus fragile que la vis car plus fine, sur laquelle on peut choisir de ne réaliser qu'une seule dent.

Le blocage en rotation de la lamelle réalisé par les surfaces latérale(s) et/ou longitudinale(s) de la lamelle, en appui contre la tranche de la traverse, améliore l'efficacité du freinage de la vis, car de tels efforts de blocage s'ajoutent aux frottements entre la lamelle et la traverse. En d'autres termes, le freinage de la vis ne dépend pas des frottements entre la traverse et une lamelle qui ne serait pas bloquée en rotation.

Par ailleurs, l'appui de la tête de vis sur la région élastique et bombée de la lamelle permet de serrer et desserrer la vis du dispositif de freinage par flexion de la lamelle, en restant dans le même encombrement latéral respectant l'espace dédié au cadre, ce qui est indispensable lorsqu'on intervient sur des cadres juxtaposés, tels que ceux montés sur un métier à tisser ou dans une machine à rentrer la chaîne où les cadres de lisses sont préparés.

De plus, l'appui de la lamelle sur la tête de vis augmente le couple de desserrage nécessaire à une rotation de la vis, même sans contact mutuel des dents, car la lamelle reste en contact avec la tête au cours du fonctionnement. Cet appui permet également de précontraindre la lamelle pour éviter ses vibrations en fonctionnement.

Dans le cas où la lamelle comporte plusieurs dents, la construction de ces dents sur la région convexe de la lamelle permet d'escamoter tous les obstacles au desserrage présents entre la vis et la lamelle en exerçant sur cette dernière une seule action dans une seule direction, sensiblement parallèle à l'axe Z₃ vers la tranche supérieure de la traverse.

D'autre part, en assurant un effort de rappel élastique F_{R} de la lamelle 4 sur la vis 3 serrée, le dispositif de freinage fonctionne avec une certaine tolérance par rapport à la longueur de la vis, notamment à l'égard de la position de la partie inférieure de la tête de la vis après serrage par rapport à la tranche supérieure de la traverse.

Par ailleurs, la réalisation d'une dent par cisaillement et pliage de la tôle constituant la lamelle permet, si la lamelle ne fléchit pas, de plier davantage cette tôle lors du desserrage, ce qui renforce l'obstacle au desserrage que forme la dent.

Selon une variante non représentée, la vis et la lamelle ne comportent respectivement qu'une seule dent. Dans ce cas, le débattement angulaire maximal de la vis avant contact mutuel des surfaces de desserrage est proche de 360°.

Toute combinaison techniquement admissible des caractéristiques techniques des variantes énoncées ci-dessus constitue une variante supplémentaire de l'invention.

## Revendications

1. Dispositif de freinage pour l'assemblage d'un montant (1G) et d'une traverse (2H) appartenant tous deux à un cadre (C) de lisses (L) de métier à tisser, ce dispositif comprenant une vis de pression (3) destinée à assembler un élément (12) du montant (1G) par rapport à un élément (21) de la traverse (2H), la vis (3) présentant une tête (32) en saillie par rapport à sa tige (31), la face inférieure de la tête (32) de la vis (3) comportant au moins une dent (34-39) et le dispositif de freinage comprenant, en outre, une lamelle (4) disposée sous la tête (32) de la vis (3), la lamelle (4) comportant au moins une dent (447) apte à être rappelée élastiquement vers la tête (32) de la vis (3) dans une position où au moins une dent (34-39) de la vis (3) et au moins une dent (447) de la lamelle (4) sont mises en contact au moins en cas de rotation de la vis (3) dans le sens du desserrage (D), **caractérisé en ce que** la lamelle (4) et la vis (3) présentent un encombrement latéral (L₄, D₃₃) inférieur à l'épaisseur (E) de la traverse (2H) et **en ce que** la lamelle (4) comporte au moins une surface latérale (431, 432) ou une surface longitudinale (433) formant obstacle à la rotation de la lamelle (4) autour d'un axe (Z₃) de la vis (3).

2. Dispositif de freinage selon la revendication 1, **caractérisé en ce que** la ou chaque dent (34-39) de la vis (3) et la ou chaque dent (447) de la lamelle (4) présentent respectivement des surfaces de serrage (346, 446), destinées à entrer mutuellement en contact glissant lors du serrage (S) de la vis (3), et des surfaces de desserrage (348, 448), destinées à entrer mutuellement en contact bloquant lors du desserrage (D) de la vis (3).

3. Dispositif de freinage selon la revendication 2, **caractérisé en ce que** la ou chaque surface de serrage (346) de la ou de chaque dent (34-39) de la vis (3) forme, avec un plan (P) orthogonal à un axe (Z₃) de la vis (3), un angle (α) inférieur à l'angle (β) formé avec ledit plan (P) par la ou chaque surface de desserrage (348) de ladite dent.

4. Dispositif de freinage selon la revendication 3, **caractérisé en ce que** l'angle (α) formé par la ou chaque surface de serrage de la ou de chaque dent (34-39) de la vis (3) est compris entre 20° et 50° et **en ce que** l'angle (β) formé par la ou chaque surface de desserrage (348) de la ou de chaque dent (34-39) de la vis (3) est compris entre 90° et 120°.

5. Dispositif de freinage selon l'une des revendications précédentes, **caractérisé en ce que** la face inférieure de la tête (32) de la vis (3) comporte plusieurs dents (34-39) réparties uniformément autour d'un axe (Z₃) de la vis (3).

6. Dispositif de freinage selon l'une des revendications précédentes, **caractérisé en ce que** la lamelle (4) est maintenue en position longitudinale sur la traverse (2H).

7. Dispositif de freinage selon l'une des revendications précédentes, **caractérisé en ce que** la ou chaque dent (447) de la lamelle (4) est disposée dans une région convexe (44) de la lamelle (4).

8. Dispositif de freinage selon la revendication 7, **caractérisé en ce que** la déformation de la lamelle (4) sous une action unidirectionnelle de l'opérateur libère la ou les dents (447) de la lamelle (4) de toute prise avec la ou les dents de la vis (3) alors que le dispositif reste sensiblement dans le même encombrement latéral (E).

9. Dispositif de freinage selon l'une des revendications 7 ou 8, **caractérisé en ce que** ladite région (44) présente une hauteur supérieure à l'état desserré ou libre (H_{D}) qu'à l'état serré (H_{S}) de la vis (3).

10. Dispositif de freinage selon la revendication 2 et l'une des revendications 3 à 9, **caractérisé en ce que** la lamelle (4) comporte un trou (445) pour le passage de la vis (3) et **en ce que** la ou chaque dent (447) de la lamelle (4) est formée par un pan issu du cisaillement du contour du trou (445) et plié en saillie au-dessus d'un plateau (444) de la lamelle (4) dans lequel est ménagé le trou (445), la tranche cisaillée du pan formant la surface de desserrage (448), tandis qu'une partie de la face supérieure du plateau (444) qui forme ce pan plié forme la surface de serrage (446).

11. Dispositif de freinage selon la revendication 10, **caractérisé en ce que** la surface de desserrage (448) est inclinée par rapport à la face (444) de la lamelle dans laquelle est ménagé le trou (445) d'un angle (δ) compris entre 90° et 130°.

12. Cadre (C) de lisses (L) pour métier à tisser comprenant deux montants (1 G, 1D) et deux traverses (2B, 2H) aptes à porter des lisses (L), **caractérisé en ce qu'**il est équipé d'au moins un dispositif de freinage (3, 4) selon l'une des revendications précédentes.

13. Cadre (C) de lisses (L) selon la revendication 12, **caractérisé en ce qu'**il comporte, en outre, un cavalier (7) intercalé entre le bout (30) de la vis (3) et le montant (1G), la lamelle (4) étant formée dans un prolongement du cavalier (7).

14. Métier à tisser, **caractérisé en ce qu'**il comprend au moins un cadre (C) de lisses (L) selon l'une des revendications 12 et 13.

## Claims

1. A braking device for the assembly of a column (1 G) and a crossbar (2H) both forming part of a loom heald (L) frame (C), said device also comprising a pressure screw (3) designed to assemble a component (12) of the column (1G) to a component (21) the crossbar (2H), the screw (3) having a head (32) protruding from its stem (31), the lower face of the head (32) of the screw (3) having at least one tooth (34-39) and the braking device also comprising a blade (4) arranged under head (32) of screw (3), the blade (4) having at least one tooth (447) adapted to be elastically returned towards the head (32) of the screw (3) in a position where at least one tooth (34-39) of the screw (3) and at least one tooth (447) of the blade (4) are brought into contact at least in the event of the rotation of the screw (3) in the loosening direction (D), **characterized in that** the blade (4) and the screw (3) have lateral dimensions (L₄, D₃₃) smaller than the thickness (E) of the crossbar (2H) and the blade (4) has at least one lateral surface (431, 432) or one longitudinal surface (433) forming an obstacle to the rotation of the blade (4) around an axis (Z₃) of the screw (3).

2. A braking device according to claim 1 **characterised in that** the or each tooth (34-39) of the screw (3) and the or each tooth (447) of the blade (4) respectively have tightening surfaces (346, 446), designed to enter mutually into sliding contact on the tightening (S) of the screw (3), and loosening surfaces (348, 448), designed to enter mutually into a locking contact on the loosening (D) of the screw (3).

3. A braking device according to claim 2 **characterised in that** the or each tightening surface (346) of the or of each tooth (34-39) of the screw (3) forms, with a plane (P) at right angles to an axis (Z₃) of the screw (3), an angle (α) smaller than the angle (β) formed with said plane (P) by the or by each loosening surface (348) of said tooth.

4. A braking device according to claim 3 **characterised in that** the angle (α) formed by the or by each tightening surface of the or each tooth (34-39) of the screw (3) is between 20° and 50° and **in that** the angle (β) of the or each loosening surface (348) of the or each tooth (34-39) of the screw (3) is between 90° and 120°.

5. A braking device according to one of the previous claims **characterised in that** the lower face of the head (32) of the screw (3) has several teeth (34-39) evenly distributed around an axis (Z3) of the screw (3).

6. A braking device according to one of the previous claims **characterised in that** the blade (4) is held in a longitudinal position on the crossbar (2H).

7. A braking device according to one of the previous claims **characterised in that** the or each tooth (447) of the blade (4) is placed in a convex region (44) of the blade (4).

8. A braking device according to claim 7, **characterised in that** the deformation of the blade (4) under a unidirectional action of the operator releases the tooth or teeth (447) of the blade (4) from any engagement with the tooth or teeth of the screw (3), while the device remains approximately in the same lateral dimensions (E).

9. A braking device according to one of claims 7 or 8, **characterised in that** said region (44) has a height greater in the loosened or free state (HD) than in the tightened state (HS) of the screw (3).

10. A braking device according to claim 2 and one of claims 3 to 9, **characterised in that** the blade (4) has a hole (445) for accommodating the screw (3) and **in that** the or each tooth (447) of the blade (4) is formed by a face obtained by the shearing of the contour of the hole (445) and bent to protrude above a plate (444) of the blade (4) in which is provided the hole (445), the sheared edge of the face forming the loosening surface (448), while a part of the upper face of the plate (444) forming this bent face forms the tightening surface (446).

11. A braking device according to claim 10 **characterised in that** the loosening surface (448) is inclined with respect to the face (444) of the blade in which is arranged a hole (445) at an angle (δ) between 90° and 130°.

12. A heald (L) frame (C) for a loom comprising two columns (1G, 1 D) and two crossbars (2B, 2H) suitable to support the healds (L) and **characterised in that** it is equipped with at least one braking device (3, 4) according to one of the previous claims.

13. A heald (L) frame (C) according to claim 12, **characterised in that** it comprises, in addition, a jumper (7) interposed between the end (30) of the screw (3) and the column (1G), the blade (4) being formed as an extension of the jumper (7).

14. A weaving loom, **characterised in that** it comprises at least one heald (L) frame (C) according to one of claims 12 and 13.

## Patentansprüche

1. Bremsvorrichtung für die Verbindung eines Pfostens (1G) und einer Traverse (2H), die beide zu einem Litzenrahmen (C, L) einer Webmaschine gehören, wobei diese Vorrichtung eine Klemmschraube (3) umfasst, die vorgesehen ist, ein Element (12) des Pfostens (1G) in Bezug auf ein Element (21) der Traverse (2H) zusammenzufügen, wobei die Schraube (3) einen in Bezug auf ihren Schaft (31) überstehenden Kopf (32) aufweist und die untere Fläche des Kopfes (32) der Schraube (3) mindestens einen Zahn (34-39) umfasst, wobei die Bremsvorrichtung außerdem eine unter dem Kopf (32) der Schraube (3) angeordnete Lamelle (4) aufweist, die mindestens einen Zahn (447) umfasst, der geeignet ist, elastisch zum Kopf (32) der Schraube (3) in eine Position vorgespannt zu werden, in der mindestens ein Zahn (34-39) der Schraube (3) und mindestens ein Zahn (447) der Lamelle (4) mindestens im Falle der Drehung der Schraube (3) in die Richtung des Lösens (D) in Kontakt gesetzt werden, **dadurch gekennzeichnet, dass** die Lamelle (4) und die Schraube (3) einen seitlichen Raumbedarf (L₄, D₃₃) kleiner als die Dicke (E) der Traverse (2H) aufweisen und dass die Lamelle (4) mindestens eine Seitenfläche (431, 432) oder eine Längsfläche (433) umfasst, die ein Hindernis für die Drehung der Lamelle (4) um eine Achse (Z₃) der Schraube (3) bilden.

2. Bremsvorrichtung nach Anspruch 1, **dadurch gekennzeichnet, dass** der oder jeder Zahn (34 - 39) der Schraube (3) und der oder jeder Zahn (447) der Lamelle (4) jeweils Klemmflächen (346, 446), die dazu dienen, in gegenseitigen gleitenden Kontakt bei der Klemmung (S) der Schraube (3) zu treten, und Lockerungsflächen (348, 448) aufweisen, die dazu dienen, in gegenseitigen Blockierkontakt bei dem Lösen (D) der Schraube (3) zu treten.

3. Bremsvorrichtung nach Anspruch 2, **dadurch gekennzeichnet, dass** die oderjede Klemmfläche (346) des oderjedes Zahns (34-39) der Schraube (3) mit einer Ebene (P) orthogonal zu einer Achse (Z₃) der Schraube (3) einen Winkel (α) kleiner als der Winkel (β), der mit der Ebene (P) von der oder jeder Lockerungsfläche (348) des Zahns gebildet wird, bildet.

4. Bremsvorrichtung nach Anspruch 3, **dadurch gekennzeichnet, dass** der von der oder jeder Klemmfläche des oder jedes Zahns (34-39) der Schraube (3) gebildete Winkel (α) zwischen 20° und 50° liegt und dass der von der oder jeder Lockerungsfläche (348) des oder jedes Zahns (34 - 39) der Schraube (3) gebildete Winkel (β) zwischen 90° und 120° liegt.

5. Bremsvorrichtung nach einem der vorhergehenden Ansprüche, **dadurch gekennzeichnet, dass** die untere Fläche des Kopfes (32) der Schraube (3) mehrere Zähne (34 - 39) umfasst, die gleichmäßig um eine Achse (Z₃) der Schraube (3) angeordnet sind.

6. Bremsvorrichtung nach einem der vorhergehenden Ansprüche, **dadurch gekennzeichnet, dass** die Lamelle (4) in Längsposition auf der Traverse (2H) gehalten wird.

7. Bremsvorrichtung nach einem der vorhergehenden Ansprüche, **dadurch gekennzeichnet, dass** der oder jeder Zahn (447) der Lamelle (4) in einem konvexen Bereich (44) der Lamelle (4) angeordnet ist.

8. Bremsvorrichtung nach Anspruch 7, **dadurch gekennzeichnet, dass** die Deformation der Lamelle (4) unter einer Einwirkung der Bedienperson in einer Richtung den Zahn oder die Zähne (447) der Lamelle (4) von jedem Eingriff mit dem Zahn oder den Zähnen der Schraube (3) freisetzt, wobei die Vorrichtung im Wesentlichen in demselben seitlichen Raumbedarf (E) verbleibt.

9. Bremsvorrichtung nach einem der Ansprüche 7 oder 8, **dadurch gekennzeichnet, dass** der Bereich (44) eine Höhe aufweist, die im gelösten oder freien (H_{D}) Zustand größer ist als im Klemmzustand (Hs) der Schraube (3).

10. Bremsvorrichtung nach Anspruch 2 und einem der Ansprüche 3 bis 9, **dadurch gekennzeichnet, dass** die Lamelle (4) ein Loch (445) für den Durchgang der Schraube (3) aufweist und dass der oder jeder Zahn (447) der Lamelle (4) von einem Stück gebildet wird, das von dem Schneiden der Kontur des Lochs (445) herrührt und hervorspringend über dem Plateau (444) der Lamelle (4) gefaltet ist, in das das Loch (445) eingearbeitet ist, wobei der geschnittene Abschnitt des Stücks die Lockerungsfläche (448) bildet, während ein Teil der oberen Fläche des Plateaus (444), die dieses gebogene Stück bildet, die Klemmfläche (446) bildet.

11. Bremsvorrichtung nach Anspruch 10, **dadurch gekennzeichnet, dass** die Lockerungsfläche (448) in Bezug auf die Fläche (444) der Lamelle, in die das Loch (445) eingearbeitet ist, um einen Winkel (δ) zwischen 90° und 130° geneigt ist.

12. Litzenrahmen (C) (L) für eine Webmaschine, der zwei Pfosten (1G, 1D) und zwei Traversen (2B, 2H) umfasst, die geeignet sind, Litzen (L) zu tragen, **dadurch gekennzeichnet, dass** er mit mindestens einer Bremsvorrichtung (3, 4) nach einem der vorhergehenden Ansprüche ausgerüstet ist.

13. Litzenrahmen (C) (L) nach Anspruch 12, **dadurch gekennzeichnet, dass** er außerdem eine Klammer (7) aufweist, die zwischen dem Ende (30) der Schraube (3) und dem Pfosten (1G) angeordnet ist, wobei die Lamelle (4) in der Verlängerung der Klammer (7) gebildet ist.

14. Webmaschine, **dadurch gekennzeichnet, dass** sie mindestens einen Litzenrahmen (C, L) nach einem der Ansprüche 12 und 13 umfasst.
